# EUROPÄISCHE PATENTSCHRIFT

(11) **EP 0 522 311 B1**
(45) Veröffentlichungstag und Bekanntmachung des Hinweises auf die Patenterteilung: **02.08.1995**
(21) Anmeldenummer: 92110007.9
(22) Anmeldetag: 13.06.1992
(51) Int. Cl.: B65G 69/18

(54) **Staukopf für ein Förderrohr**
Retarding dispenser for a conveying pipe
Fermeture de retenue pour un tube de transport

(30) Priorität: 09.07.1991 CH 2037/91
(43) Veröffentlichungstag der Anmeldung: 13.01.1993
(73) Patentinhaber: BÜHLER AG, 9240 Uzwil (CH)
(72) Erfinder: Straub, Paul, CH-9242 Oberuzwil (CH)
(74) Vertreter: Révy von Belvárd, Peter

(56) Entgegenhaltungen:
- US-A- 4 270 671

## Beschreibung

Die Erfindung betrifft einen Staukopf für ein Förderrohr gemäss dem Oberbegriff des Anspruches 1.

Schüttgüter, insbesondere Getreide, müssen beim oder für den Transport häufig von einem Behälter in einen anderen, von einem Transportgerät, wie Schiffe, Eisenbahnwagen, Container und ähnlichem, in ein anderes Transportgerät umgeladen werden. Dabei wird meist die Schwerkraft des Schüttgutes selbst oder pneumatische Energie benützt, wobei das Schüttgut mittels eines Förderrohres von einem in einen zweiten Behälter fliesst. Beim einfachen Ausfliessen aus einem derartigen Förderrohr fällt das Schüttgut oft mit erheblicher Geschwindigkeit und in unregelmässigem Fluss in den Behälter. Dabei entsteht meist eine enorme Menge von Staub. Dies ist nicht erwünscht, entstehen dadurch doch neben der Beeinträchtigung der Luft zum Teil erhebliche Materialverluste.

Zur Verhinderung der erwähnten Staubentwicklung sind verschiedene Vorrichtungen bekannt, welche am Ende des Förderrohres angebracht werden. Eine derartige Vorrichtung ist in der US 4'270'671 beschrieben. Es handelt sich dort um einen Staukopf mit einem geradlinig bewegbaren Behälter. Ein mit beweglichen Klappen versehener Verschlussteil sorgt dafür, dass eine bestimmte Menge von Schüttgut abgeführt wird. Die Schriften US 4'410'076, US 4'390'090 und DE 26 27 535 weisen alle am Ende des Förderrohres fest montiert einen Staukopf auf, in welchem sich das einfliessende Schüttgut staut, bis sich eine bestimmte Menge Schüttgut in diesem Staukopf befindet. Klappen am Auslass des Staukopfes öffnen sich, sobald eine bestimmte Menge, ein bestimmtes Gewicht an Schüttgut im Staukopf ist und die Entleerung des Inhalts des Staukopfes beginnt. Diese Klappen werden durch verschiedenartige Mechanismen wie Federn, Gegengewichte u.dgl. vorgespannt in geschlossenem Zustand gehalten, bis eine bestimmte Kraft, d.h. ein bestimmtes Gewicht des Schüttgutes, die Vorspannung überwindet und sich die Klappen öffnen. Allerdings bewirkt die Fördergeschwindigkeit des Schüttgutes beim Aufprall im Staukopf ebenfalls eine Kraft auf die Klappen und verstärkt dabei die Wirkung des bereits gestauten Schüttgutes. Dies kann ein unkontrolliertes Oeffnen der Klappen bewirken. Zur Verminderung dieses Effektes benützt die US 4'410'076 oberhalb der Auslassklappe eine oder zwei Prallflächen und eine über einen Teil des Querschnittes des Staukopfes reichende drehbare Drosselklappe auf. US 4'390'090 weist für den gleichen Zweck am Eingang des Staukopfes einen zylinderförmigen Einbau mit Löchern in Art eines groben Siebes auf, welche die Strömung des Schüttgutes abbremsen sollen, aber gerade aufgrund der geschlossenen Struktur zu einer Kompaktierung des Materiales innerhalb derselben führen kann, was ein Ausfliessen verhindert. Bei DE 26 27 535 sind keine Einbauten vorhanden, dafür ist die Auslassklappe zusätzlich mit einem Schwingungsdämpfer versehen, welcher stossartige Belastungen der Klappe durch den Schüttgutstrom absorbiert. Alle diese Vorrichtungen sind in der Lage einen Teil der Wucht des Förderstromes zu absorbieren und dadurch die Staubentwicklung etwas zu verkleinern. Sie bleibt aber immer noch von der Förderhöhe und der Fördergeschwindigkeit und der Art des Schüttgutes abhängig.

Aufgabe der Erfindung ist es, für ein Förderrohr für Schüttgüter ein Förderrohrende, d.h. einen Kopf für ein derartiges Förderrohr zu schaffen, welcher unabhängig von der Wucht und der Art des geförderten Schüttgutes dieses gleichmässig ausfliessen lässt, sodass eine Staubentwicklung möglichst unterbleibt.

Diese Aufgabe wird durch die kennzeichnenden Merkmale des Anspruches 1 gelöst. Dadurch, dass der Anschlussteil des Staukopfes mit dem meist eine Schräglage einnehmenden Förderrohr gelenkig verbunden ist, werden diese beiden Teile miteinander einen Winkel einschliessen, so dass herabfallendes Schüttgut nicht unmittelbar auf den unter der Wirkung einer Vorspannungseinrichtung stehenden Verschlussteil fallen kann, wird dessen Beeinflussung durch die kinetische Energie vermieden. Dasselbe geschieht, wenn - wie bevorzugt - mindestens eine Prallfläche am Staukopf vorgesehen ist.

Durch die Vorspannungseinrichtung wird eine gewisse Beruhigungszeit gesichert, in der sich etwaiger Staub innerhalb des Staukopfes legen kann, bevor das Gewicht des zugeflossenen Schüttgutes ausreicht, den Staukopf zu öffnen.

Durch die Merkmale des Anspruches 2 wird die Konstruktion vereinfacht, da auf diese Weise der Verschlussteil gleichzeitig die Behälterwandungen für den Stauraum bildet.

Die Ausbildung gemäss Anspruch 7 ist kompakter und betriebssicherer, als dies bei Verwendung von Zugfedern der Fall wäre, und sichert überdies eine gute Führung.

Die Krümmung bzw. Knickung gemäss Anspruch 8 stellt eine weitere Massnahme zum Abbremsen des Schüttgutes vor dem Eintritt in den Stauraum dar.

Weitere Einzelheiten der Erfindung ergeben sich an Hand der nachfolgenden Beschreibung von in der Zeichnung schematisch dargestellten Ausführungsbeispielen.
- Fig. 1: zeigt eine Beladeeinrichtung für Schüttgut zur Beladung von Schiffen
- Fig. 2: zeigt eine erste Variante des erfindungsgemässen Staukopfes im Längsschnitt
- Fig. 3: zeigt denselben Staukopf im Querschnitt
- Fig. 4: zeigt einen erfindungsgemässen Staukopf in einer weiteren Variante mit zusätzlichen Schikanen
- Fig. 5: zeigt eine weitere Variante des erfindungsgemässen Staukopfes 1 mit anderen Schikanen.

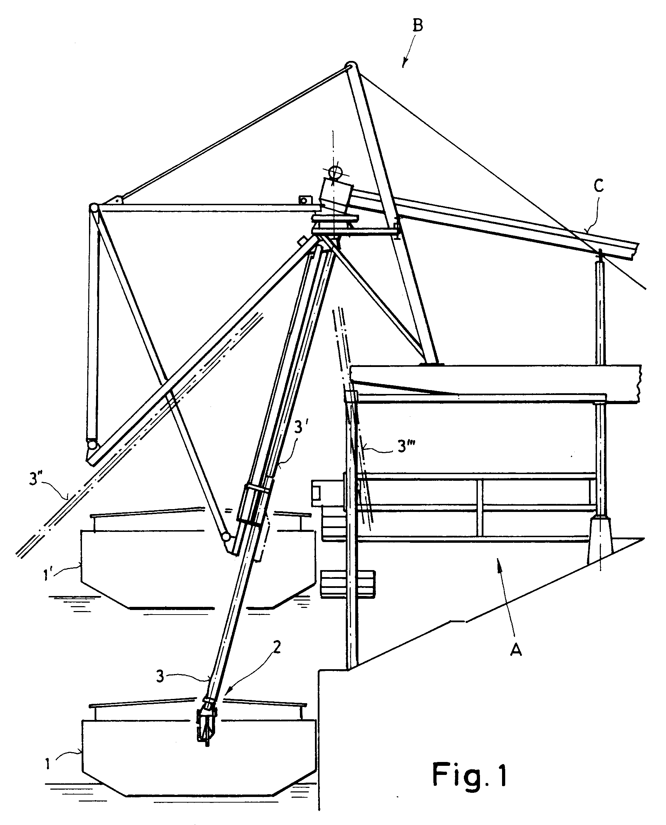

Fig. 1 zeigt eine Beladeeinrichtung für Schüttgut, welches pneumatisch oder mit anderen Mitteln gefördert wird, mit einer Anordnung eines herkömmlichen Förderrohres 3' bei Beladung eines Schiffes bei Hochwasser und die Anordnung eines Förderrohres 3 mit erfindungsgemässem Staukopf 1 bei Beladung eines Schiffes bei Niedrigwasser. Auf einer Schiffsländeeinrichtung A befindet sich eine kranartige Aufhängung B. An der kranartigen Aufhängung B ist einerseits eine Zuführung C für pneumatisch gefördertes Schüttgut, andererseits ein Förderrohr 3 als Fortsetzung der Zuführung C. Das Förderrohr 3 kann in verschiedene Lagen geschwenkt werden, um Behälter, hier als Schiffsquerschnitte dargestellt, in unterschiedlicher Lage füllen zu können. Das Förderrohr 3 ist einmal als herkömmliches Förderrohr 3' im Zustand des Beladens eines Schiffes bei Hochwasser dargestellt. Als Förderrohr 3'' wird es in einer weiten Ausladung und als Förderrohr 3''' in Ruheposition gezeigt. In der Position als Förderrohr 3, zum Beladen eines Schiffes bei Niedrigwasser, weist es am unteren Ende einen erfindungsgemässen Staukopf 1 auf, welcher mittels Drehgelenken 2 mit dem eigentlichen Förderrohr 3 gelenkig verbunden ist. Die Drehgelenke 2 ermöglichen, dass der Staukopf 1, unabhängig von der Lage, respektive der Ausladung des Förderrohres 3, immer in vertikaler Lage ist. Das Schüttgut wird von einem nicht dargestellten Lager durch die Zuführung C, welche z.B. als Rohr mit pneumatischer Förderung oder als Kanal mit förderbandartiger Förderung ausgebildet ist, zum oberen Ende und anschliessend durch das Förderrohr 3 zum Staukopf 1 gefördert. Im Staukopf 1 wird das einfliessende Schüttgut soweit gestaut, bis eine gewünschte Menge vorhanden ist, worauf sich der Staukopf nach unten öffnet und das Schüttgut gleichmässig und ohne Staubentwicklung ausfliessen kann. Die Wucht kann - auf Grund des sich fast stets einstellenden Winkels zwischen dem Förderrohr 3 und dem herabhängenden Staukopf 1 bereits durch Anprall an die Wandungen des Staukopfes so weit gemildert sein, dass sie das Öffnen des unteren Verschlusses des Staukopfes 1 nicht mehr beeinflusst, vielmehr dieses Öffnen allein gewichtsabhängig erfolgt.

Der Anschlussteil 4 besteht aus einem Anschlussflansch 5, einer Halterung für die zwei seitlichen Drehlager 2 und einem zentralen Rohrstück. Über das Drehlager 2 ist der Anschlussteil 4 mit dem Mittelteil 7 des Staukopfes tragend verbunden. Im Mittelteil befinden sich die Drehlager 2 in Halterungselementen 8. Der Mittelteil besteht am oberen Ende aus einem geknickten Rohrstück 9, an dem seitlich die Halterungselemente 8 befestigt sind und das an einem ersten Flansch 10 einen vorzugsweise ringförmigen, gegebenenfalls auch einem eckigen Flansch angepassten Gummibalg oder einfach eine elastische Platte 11 und an einem zweiten Flansch 12, Verbindungselemente 13 und 14 zu einem beweglichen Verschlussteil 21 aufweist. Der Gummibalg 11 gewährleistet einen staubdichten Anschluss des Rohrstückes 9 des Mittelteils 7 an das Rohrstück 6 des Anschlussteils 4 bei verschiedenen Ausrichtungen des Förderrohres 3 (vgl. strichpunktierter Anschlussteil).

Am Rohrstück 9 des Mittelteils 7 setzt seitlich ein Verbindungsteil 15 an, der ein zentrales Rohrstück 16 fest mit dem Rohrstück 9 verbindet. Auf der geneigten oberen Kontur des Verbindungsteils 15 liegt eine Prallfläche 17. Vorzugsweise ist ihre obere Begrenzungslinie ein Kreissegment, gegebenenfalls eine gerade Linie, des Rohrstückes 9 und ihre untere Begrenzung ein Umfangsabschnitt eines Rohres 16, sodass letzteres von der Prallfläche 17 genau bedeckt wird. Die Prallfläche 17 liegt der Ausmündung des Förderrohres 3 bzw. des Anschlussteiles 4 gegenüber, so dass die Wucht des herabfallenden Schüttgutes abgefangen wird und das Öffnen des Staukopfes in der nachstehend beschriebenen Weise nicht beeinflussen kann. Im Prinzip könnte sich eine solche Prallfläche auch bei Schräglage des Förderrohres 3 dadurch ergeben, dass das herabfallende Gut auf die den Stauraum umgebende Wandung fällt, da ja durch das Gelenk 2 für die meisten Anwendungsfälle sich ein Winkel zwischen der Längsachse des Förderrohres 3 und des darunterliegenden Staukopfes 1 ergeben wird.

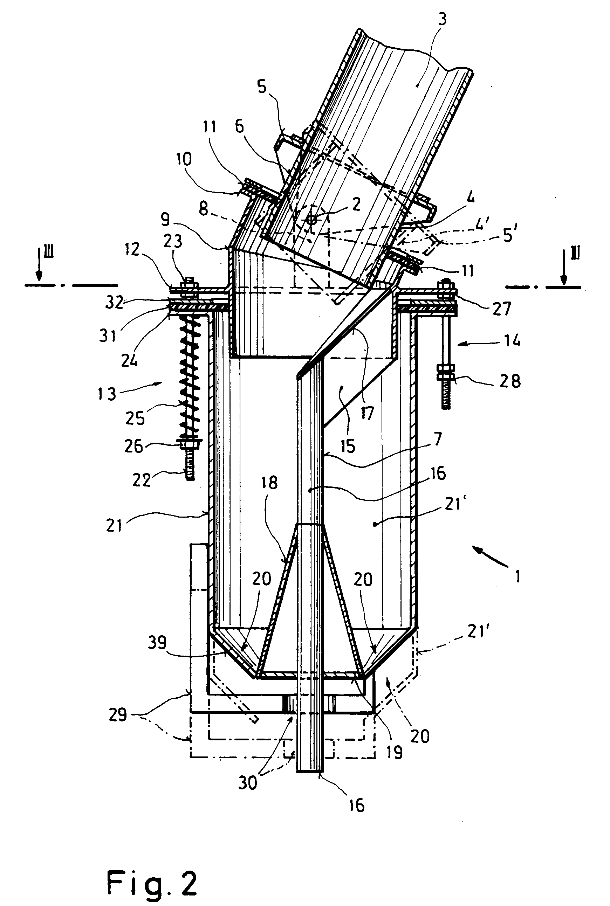

Fig. 2 zeigt eine erste Variante des erfindungsgemässen Staukopfes 1 im Längsschnitt. Der Staukopf 1 ist mittels eines gekrümmten, hier z.B. geknickten, Rohrstückes 9 und zwei seitlichen Drehlagern 2 an den Halterungsteilen 8, mit einem Anschlussteil 4, 4' am Anschlussflansch 5, 5' des Förderrohres 3 an dessen unteren Ende schwenkbar verbunden. Die Halterungsteile 8 für die Drehlager 2 sind als seitliche Verstärkungen des gekrümmten Rohrstückes 9 ausgebildet. Dabei zeigt die gestrichelte Darstellung des Anschlussteiles 4' und des Anschlussflansches 5' eine weiter ausgeschwenkte Position. Das Gewicht des mit dem Förderrohr 3 über die Drehlager 2 schwenkbar verbundenen Staukopfes 1 hält diesen stets in vertikaler Stellung. Ein Gummibalg oder bevorzugt eine ebene biegsame Platte 11 dichtet zwischen dem Anschlussteil 4 und dem gekrümmten Einlassrohrstück 9 staubdicht ab.

Seitlich angeordnete Verbindungselemente 13 verbinden einen Flansch 12 des gekrümmten Rohrstückes 9 mit dem Flansch 24 des Staukopfes 1 und dienen einerseits der Führung desselben, anderseits zum Abstützen von Druckfedern 25, die günstiger sind, als an der Oberseite des Staukopfes 1 wirkende Zugfedern. Die Verbindungselemente 13 bestehen aus Gewindestäben 22, die in Löchern 23 am Flansch 12 befestigt sind und durch Löcher am Flansch 24 des Verschlussteiles 21 führen. Dabei sorgt ein weiterer Gummibalg bzw. eine weitere biegsame Platte 31 für die Abdichtung zwischen dem gekrümmten Einlassrohrstück 9 und dem Verschlussteil 21 des Staukopfes 1.

Der Verschlussteil 21 weist vorzugsweise einen runden Querschnitt auf, sodass er mit den Verschlussflächen 39 an seinem unteren Ende einen Stauraum 21' mit annähernd zylindrischem Querschnitt bildet. Der Querschnitt des Verschlussteiles 21 und damit des Stauraumes 21' kann aber auch vieleckig, z.B. quadratisch ausgestaltet sein.

Unterhalb eines Flansches 24 am oberen Ende des Verschlussteiles 21, 21' sind die erwähnten Druckfederelemente 25 über die Führungsstangen 22 gestülpt, welche gegen unten mit Spannvorrichtungen 26, z.B. Muttern, gehalten werden. Diese Federelemente 25 werden durch die Spanneinrichtungen 26 derart vorgespannt, dass der Verschlussteil 21 erst bei einem gewünschten Füllgewicht diese Vorspannung überwindet und sich nach unten bewegt. Verbindungs- und Führungselemente 14, vorzugsweise in Form von Gewindestangen, ebenfalls seitlich angeordnet, sind am Flansch 12 des gekrümmten Rohrstückes 9 befestigt und führen durch Löcher 27 des Flansches 24 des Staukopfes 1. Der Staukopf 1 ist an diesen Verbindungselementen 14 in vertikaler Richtung verschiebbar, wobei Anschlagelemente 28, vorzugsweise Muttern, die vertikale Beweglichkeit durch Anschlag begrenzen.

Der Verschlussteil 21 weist am unteren Ende eine nach unten einwärts abgewinkelte Verschlussfläche 39 mit einer das Ausfliessen erleichternden Schrägfläche, insbesondere einer Kegelfläche zur Begrenzung einer Auslassöffnung 20 auf. In der Mitte längs des Staukopfes 1 befindet sich ein Rohrstück 16, welches mittels dem Verbindungsteil 15 mit dem gekrümmten Einlassrohrstück 9 fest verbunden ist. Auf dem oberen, schrägen Ende des Rohrstückes 16 und des Verbindungsteiles 15, diese überdeckend, ist eine Prallfläche 17 senkrecht zum Verbindungsteil 15 angebracht, welche bis zum Knick des gekrümmten Rohrstückes 9 in der Höhe des Flansches 12 reicht. Diese Prallfläche 17 steht dadurch im Winkel zum Flansch 12 nach unten geneigt und weist annähernd die Form eines Kreissegmentes auf. Das Rohrstück 16 ist im unteren Teil, etwa von der Mitte nach unten, mit einem konzentrischen Verschlusskörper 18, umfangen, welcher mit seiner Grundfläche 19 die Auslassöffnung, bei in oberer Position befindlichem Verschlussteil 21, von der radialen Innenseite her, geschlossen hält. Das Rohrstück 16 dient dabei als Halter für den Konus 18. Die Grundfläche 19 des konzentrischen Verschlusskörpers weist die gleiche Form auf wie die Auslassöffnung 20, wenn sich der Verschlussteil nach unten bewegt hat. Bei Wahl eines zylindrischen Verschlussteiles empfiehlt es sich, den Verschlusskörper als Kegel auszugestalten, bei prismenförmigen Verschlussteil als Pyramide.

Das Rohrstück 16 reicht noch über die Grundfläche 19 des Verschlusskörpers 18 hinaus, weiter nach unten und zwar mindestens um die Länge der maximalen Verschiebbarkeit des Verschlussteiles 21, welche durch die oben beschriebenen Verbindungselemente 14 mit den Anschlägen 28 definiert ist. Dieser nach unten vorstehende Teil des Rohres 16 dient als konzentrische Führung für den Verschlussteil 21 durch Zusammenwirken mit mindestens einem L-förmigen Halter 29, welcher mit einem Schenkel seitlich aussen am Verschlussteil 21 fest angebracht ist und dessen anderer Schenkel mit einer Oeffnung 30 das Rohr 16 in Längsrichtung verschiebbar umfasst. Durch diese konzentrische Führung des Verschlussteiles 21 durch das Rohr 16 ist ein vollständiges Verschliessen der Auslassöffnung 20 durch die Grundfläche 19 des Verschlusskörpers 18 im oberen Lagezustand des Verschlussteiles 21 garantiert. In gleichem Sinne bleibt die Auslassöffnung 20 auch im unteren Lagezustand konzentrisch offen.

Der Staukopf 1 bleibt, durch sein eigenes Gewicht durch die Drehlager 2 schwenkbar gehalten, immer in vertikaler Richtung, unabhängig von der Neigung des Förderrohres 3. Wird nun Schüttgut durch das Förderrohr 3 zum Staukopf 1 gefördert, so gelangt es in den Anschlussteil 4 und prallt, bei starker Neigung des Förderrohres 3, auf die Prallfläche 17 und fällt anschliessend in den Stauraum 21' des Staukopfes 1. Bei kleiner Neigung des Förderrohres 3 prallt das Schüttgut auf die Wand des gekrümmten Rohrstückes 9. Das Schüttgut wird dabei an der Prallfläche 17 und/oder an der Wand des gekrümmten Rohrstückes 9 abgebremst. Anschliessend fällt das Schüttgut in den Stauraum 21' des Staukopfes 1. Im Stauraum selbst kann sich somit kein Staub mehr bilden. Der Verschlussteil 21 befindet sich in der oberen Stellung, bei der seine Auslassöffnung 20 durch die Grundfläche des Verschlusskörpers 19 verschlossen ist. Das Schüttgut staut sich nun im Stauraum 21', bis das Gewicht des Schüttgutes genügt, um die Vorspannung der Federn 25 zu überwinden. Somit verschiebt sich der Verschlussteil 21 längs des Rohres 16 nach unten und die Auslassöffnung 20 wird frei gegeben. Jetzt kann Schüttgut nur durch seine Schwerkraft getrieben nach unten auslaufen. Sobald das Gewicht des im Stauraumes 21' befindlichen Schüttgutes nicht mehr ausreicht, um die Vorspannung der Federn 25 zu überwinden, drücken die Federn 25 den Verschlussteil nach oben, wobei die Öffnung 20 wieder verschlossen wird.

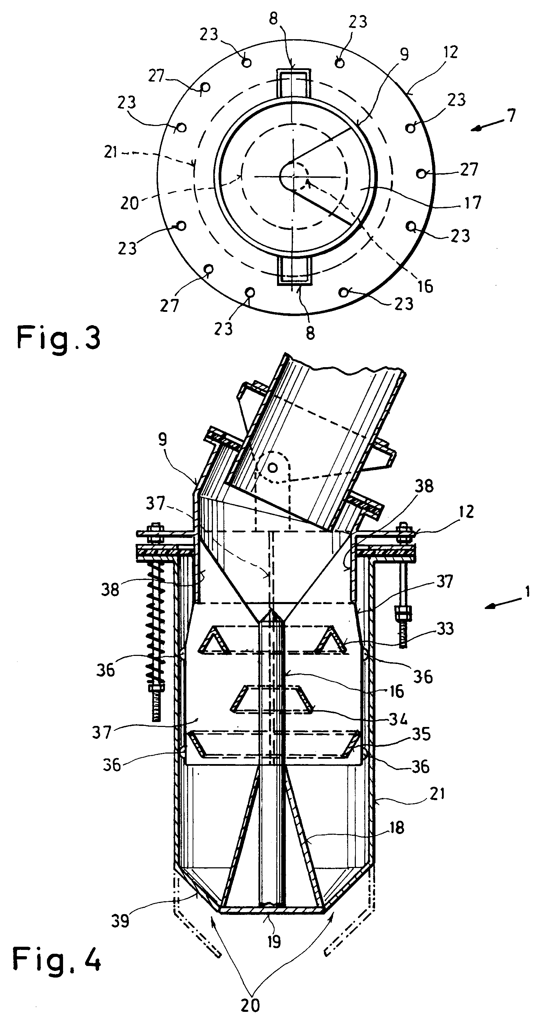

Fig. 3 zeigt den Staukopf im Querschnitt III-III von Fig. 2 auf der Höhe des Flansches 12. Ringförmig angeordnet auf dem Flansch 12 befinden sich die Löcher 23, 27 für die Verbindungselemente 13, 14. Konzentrisch nach innen befinden sich das gekrümmte Einlassrohrstück 9 mit den beiden seitlichen Halterungen 8 für die Drehlager 2 und das Rohrstück 16. Die etwa kreissegmentförmige Prallfläche 17 überdeckt das Rohrstück 16 und verbindet dieses mit der Wand des gekrümmten Rohrstückes 9, wobei ein Teil des Innenquerschnittes des gekrümmten Rohres abgedeckt wird. Dabei liegt die Prallfläche 17 etwa im rechten Winkel zu den Halterungen 8 für die Drehlager 2. Gestrichelt ist der Stauraum 21 und dessen Auslassöffnung 20 dargestellt.

Fig. 4 zeigt eine weitere Variante des Staukopfes. Diese Variante unterscheidet sich von der Variante nach Fig. 2 durch eine Anordnung mehrerer und verschiedener Prallflächen im Inneren des Verschlussteiles 21. Daher werden hier nur die Besonderheiten dieser Ausführungsform beschrieben. Mit dem gekrümmten Einlassrohrstück 9 sind Führungswände 37 fest verbunden. Diese Führungswände 37 reichen etwa von der Höhe des Flansches 12 am gekrümmten Einlassrohrstück 9 nach unten in den Verschlussteil 21 hinein. Dabei sind sie ebenfalls in fester Verbindung mit dem Rohrstück 16. Der Verschlussteil 21 wird über ringförmig angeordnete Führungselemente 36 konzentrisch um diese Führungswände 37 und das Rohr 16 gelagert. Der Verschlussteil 21 bewegt sich je nach Gewicht des gestauten Schüttgutes wie bei der vorhergehenden Variante nach unten oder oben, um die Auslassöffnung 20 von der Verschlusskörpergrundfläche 18 freizugeben und zu öffnen und wieder zu verschliessen. Die Führungselemente 36 sind als Gleitelemente oder Rollelemente ausgebildet und sorgen für eine konzentrische Führung des Oeffnungsteiles 21 gegenüber dem rohrförmigen Mittelteil 7. Im rohrförmigen Mittelteil 7 ist mindestens eine Führungswand 37 eingebaut, welche den Querschnitt des rohrförmigen Mittelteils 7 teilt und am oberen Ende in das gekrümmte Rohr 9 hineinreicht bis etwa zur Höhe des Flansches 12. In bevorzugter Ausführung werden zwei derartige Führungswände 37 eingebaut, welche z.B. rechtwinklig zueinander stehen und so den Querschnitt des rohrförmigen Mittelteiles in vier gleiche Teilquerschnitte unterteilen. Diese Führungswände 37 dienen einerseits zur Kanalisierung des fallenden Schüttgutes, andererseits stellen sie die feste Verbindung zwischen dem gekrümmten Einlassrohrstück 9 und dem Rohr 16 mit dem Verschlusskörper 18 dar. In die Führungswände 37 sind Prallflächen 33, 34, 35 eingebaut, welche zur Abbremsung des einfallenden Schüttgutes durch Ablenkung dienen. Diese Prallflächen 33, 34, 35 sind ringartig um das Rohr 16 angeordnet, wobei sie die Führungswände 37 durchstossen und durch diese Führungswände 37 gehalten werden. Die Prallflächen 33 haben den Querschnitt eines Winkelprofiles mit dem Winkel nach oben. Somit lenken die Prallflächen 33 das einfallende Schüttgut nach aussen und nach innen ab. Die Prallflächen 34, 35 sind als Flachbandprofile ausgestaltet und einseitig, gegenüber dem Verschlussteil 21 nach innen oder aussen geneigt. Die Prallflächen 34 weisen das Schüttgut nach aussen, die Prallflächen 35 nach innen ab. Die Prallflächen 33, 34, 35 verhindern, dass gefördertes Schüttgut ungebremst auf die Abschlussfläche 39 am unteren Ende des Oeffnungsteiles 21 trifft. Auf diese Weise bewirkt nur das Gewicht des im Staukopf 1 gestauten Schüttgutes eine Oeffnung des Staukopfes 1 durch Hinunterdrücken des Oeffnungteiles 21, wie dies bei Fig. 2 beschrieben ist.

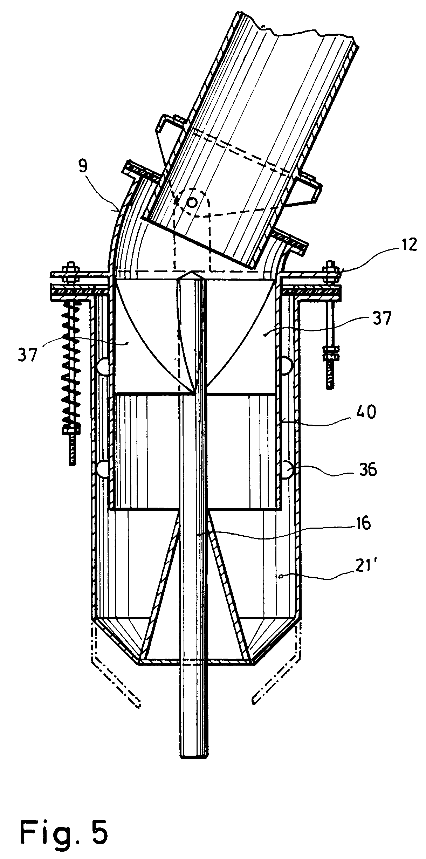

Fig. 5 zeigt eine weitere Variante des erfindungsgemässen Staukopfes 1. Diese Variante unterscheidet sich von der Variante nach den Fig. 2 und 4 durch eine besondere Ausgestaltung der Prallflächen im Inneren des Oeffnungsteiles 21. Daher werden hier nur die Besonderheiten dieser Ausführungsform beschrieben. Die Bei Fig. 4 beschriebenen Führungswände 37 sind dabei derart ausgestaltet, dass sie gleichzeitig als Prallflächen dienen. Es sind dabei mindestens eine, bevorzugterweise aber zwei einander gegenüberliegende Führungswände 37 angeordnet. Diese Führungswände 37 sind aussen mit der Wand 40 des nach unten verlängerten gekrümmten Rohrstückes 9 in fester Verbindung und halten mit ihrer Innenseite das zentrale Rohr 16. Die Führungswände 37 winden sich schraubenlinienförmig um das zentrale Rohr 16 nach unten ein Stück in den Stauraum 21', wobei die Schraubenlinie eine viertel bis eine halbe Umdrehung umfasst. Dabei kann die Steigung der Spirale der Führungswände 37 nach unten degressiv sein. Durch diese Ausgestaltung der Führungswände 37 haben diese zusätzlich die Funktion von Prallwänden. Dabei wird das einfliessende Schüttgut durch diese schraubenlinienförmig angeordneten Führungswände 37 im Fall nach unten im Staukopf 1 kontinuierlich abgebremst. Durch diese kontinuierliche Abbremsung wird die Staubentwicklung noch kleiner als bei der vorstehend beschriebenen Variante, wobei der Staub gleichzeitig im Schüttgut selbst gebunden verbleibt.

Es versteht sich, dass im Rahmen der Erfindung zahlreiche Varianten möglich sind, beispielsweise eine solche, bei der der Stauraum von einem vom Verschlussteil gesonderten, und insbesondere von letzterem wenigstens teilweise umgebenen, Gehäuse eingeschlossen ist, das den Verschlussteil trägt und gegebenenfalls auch führt. In diesem Falle kann das Gehäuse selbst die Prallfläche(n) tragen. Anderseits ist die an Hand der Fig. 2 gezeigte Konstruktion wesentlich leichter und billiger, wobei die Funktionssicherheit dennoch gewahrt bleibt.

## Patentansprüche

1. Staukopf für ein Förderrohr (3) für Schüttgüter zur Verminderung von Staubentwicklung und von Materialverlust mit einem mit dem Staukopf über ein Drehgelenk (2) derart verbundenen Anschlussteil (4) für das Förderrohr (3), dass der Staukopf sich unabhängig von der Lage des Förderrohres (3) immer in annähernd senkrechter Lage befindet, einem in einen Stauraum (21') des Staukopfes führenden Einlassrohrstück (9), einem unter der Wirkung einer Vorspannungseinrichtung (25) stehenden Verschlussteil (21) für eine Auslassöffnung (20), wobei die Vorspannungseinrichtung (25) unter einer derartigen Vorspannung gehalten ist, das, bei Erreichen eines vorbestimmten, gegebenenfalls einstellbaren, Gewichtes des im Staukopf gestauten Schüttgutes, dasselbe die Vorspannung überwindet, so dass sich der Verschlussteil (21) nach unten bewegt und die Auslassöffnung (20) unter dem Einflusse des Gewichtes freigibt, dadurch gekennzeichnet, dass eine Geradführungseinrichtung (16, 29) zur ausschliesslich vertikalen Oeffnungs-und Schliessbewegung des Verschlussteils (21) vorgesehen ist .

2. Staukopf nach Anspruch 1, dadurch gekennzeichnet, dass der Verschlussteil (21) selbst den Stauraum (21') begrenzt.

3. Staukopf nach einem der Ansprüche 1 bis 2, dadurch gekennzeichnet, dass innerhalb des Stauraumes (21') ein feststehender Verschlusskörper (18) mit einer Schrägfläche, insbesondere einer Konusfläche, zur Begrenzung der Auslassöffnung (20) dem Verschlussteil (21) gegenüberliegt.

4. Staukopf nach Anspruch 3, dadurch gekennzeichnet, dass der Verschlusskörper (18) von einem mit dem Anschlussteil (4) verbundenen Halter (16) getragen ist.

5. Staukopf nach Anspruch 4, dadurch gekennzeichnet, dass die Geradführung (16, 29) eine Fortsetzung des Halters (16) umfasst.

6. Staukopf nach Anspruch 4 oder 5, dadurch gekennzeichnet, dass der Halter bzw. die Fortsetzung des Halters (16) rohrförmig ausgebildet ist bzw. sind.

7. Staukopf nach einem der vorhergehenden Ansprüche, dadurch gekennzeichnet, dass mit dem Einlassrohrstück (9) eine nach unten ragende Führungseinrichtung (22) mit einem Anschlag (26) vorgesehen ist und dass der Verschlussteil (21) einer an dieser Führungseinrichtung (22) geführten Führungsflansch (24) aufweist, wobei eine Druckfedereinrichtung (25) zwischen Anschlag (26) und Führungsflansch (24) eingesetzt ist.

8. Staukopf nach einem der vorhergehenden Ansprüche, dadurch gekennzeichnet, dass das Einlassrohrstück (9) gekrümmt bzw. geknickt ist.

9. Staukopf nach einem der vorhergehenden Ansprüche, dadurch gekennzeichnet, dass zwischen dem am Förderrohr (3) befestigten Anschlussteil (4) und dem gelenkig damit verbundenen Einlassrohrstück (9) eine bewegliche Dichtung (11), insbesondere eine biegsame Platte, vorgesehen ist.

10. Staukopf nach einem der vorhergehenden Ansprüche, dadurch gekennzeichnet, dass zwischen dem Einlassrohrstück (9) und dem beweglichen Verschlussteil (21) eine bewegliche Dichtung (31), insbesondere eine biegsame Platte, vorgesehen ist.

## Claims

1. A ramhead for a conveyor pipe (3) for bulk materials for reducing the development of dust and loss of material, comprising a connecting element (4) for the conveyor pipe (3), which element is connected to the ramhead via a rotary hinge (2) in such a manner that the ramhead is, independent of the position of the conveying pipe (3), always in a virtually vertical position, an inlet-pipe section (9) which connects to a ram chamber (21') of the ramhead, a closing element (21) for an outlet opening (20), which element is biased by a pretensioning device (25), and that the pretensioning device (25) is held at such pretension that on arriving at a specified weight, which is adjustable if appropriate, of the bulk material in the ramhead, the latter overcomes the tension, causing the closing element (21) to move downwards and release the outlet opening (20) under the influence of the weight, **characterized in that** a straight guiding device (16, 29) is provided for exclusively vertical opening and closing movements of the closing element (21).

2. A ramhead according to claim 1, **characterized in that** the closing element (21) itself defines the ram chamber (21').

3. A ramhead according to one of claims 1 to 2, **characterized in that** inside the ram chamber (21') a fixed sealing element (18) comprising a slanted surface, in particular a conical surface, is positioned opposite the closing element (21) for the purpose of defining the outlet opening (20).

4. A ramhead according to claim 3, **characterized in that** the closing element (18) is supported by a holder (16) which is connected to the connecting element (4).

5. A ramhead according to claim 4, **characterized in that** the straight guide (16, 29) encloses an extension of the holder (16).

6. A ramhead according to claim 4 or 5, **characterized in that** the holder or the extension of the holder (16) is/are arranged to be tubular.

7. A ramhead according to one of the above claims, **characterized in that** with the inlet pipe element (9) is provided a downwardly projecting guiding device (22) comprising a stop (26), and that the closing element (21) comprises a guide flange (24) which is guided on this guiding device (22), and that a pressure-spring device (25) is inserted between the stop (26) and the guide flange (24).

8. A ramhead according to one of the above claims, **characterized in that** the inlet piece element (9) is curved or kinked.

9. A ramhead according to one of the above claims, **characterized in that** a movable seal (11), in particular a flexible plate, is provided between the connecting element (4) which is attached to the conveyor pipe (3) and the thereto hinged inlet-pipe piece (9).

10. A ramhead according to one of the above claims, **characterized in that** a movable seal (31), in particular a flexible plate, is provided between the inlet-pipe piece (9) and the movable closing element (21).

## Revendications

1. Fermeture de retenue pour un tube de transport (3) destiné à des produits en vrac, pour diminuer le développement de poussière et la perte de matière, avec une partie de raccordement (4) du tube de transport (3) reliée à la fermeture de retenue par l'intermédiaire d'une articulation tournante (2), de manière que la fermeture de retenue se trouve toujours en position à peu près verticale, indépendamment de la position du tube de transport (3), avec un élément tubulaire d'admission (9) assurant un guidage dans un espace de retenue (21') de la fermeture de retenue, une partie fermeture (21) placée sous l'effet d'un dispositif de précontrainte (25), pour une ouverture d'évacuation (20), le dispositif de précontrainte (25) étant maintenu sous une précontrainte telle que, lors de l'atteinte d'un poids prédéterminé, le cas échéant réglable, du matériau en vrac accumulé dans la fermeture de retenue, le produit surmonte l'effet de la précontrainte, de manière que la partie de fermeture (21) se déplace vers le bas et ouvre l'ouverture d'évacuation (20) sous l'influence du poids, caractérisé en ce qu'un dispositif de guidage rectiligne (16, 29) est prévu pour assurer un déplacement d'ouverture et de fermeture, exclusivement vertical, de la partie de fermeture (21).

2. Fermeture de retenue selon la revendication 1, caractérisée en ce que la partie de fermeture (21) elle même délimite l'espace de retenue (21').

3. Fermeture de retenue selon l'une des revendications 1 à 2, caractérisée en ce qu'à l'intérieur de l'espace de retenue (21') est disposé un opercule (18) fixe, avec une face oblique, en particulier une face conique, destinée à délimiter l'ouverture d'évacuation (20) vis-à-vis de la partie de fermeture (21).

4. Fermeture de retenue selon la revendication 3, caractérisée en ce que l'opercule (18) est porté par un support (18) relié à la partie de raccordement (4).

5. Fermeture de retenue selon la revendication 4, caractérisée en ce que le guidage rectiligne (16, 29) comprend un prolongement du support (16).

6. Fermeture de retenue selon la revendication 4 ou 5, caractérisée en ce que le support, respectivement le prolongement du support (16), est ou sont tubulaires.

7. Fermeture de retenue selon l'une des revendications précédentes, caractérisée en ce que sur l'élément tubulaire d'admission (9) est prévu un dispositif de guidage (22), se projetant vers le bas, avec une butée (26), et que la partie de fermeture (21) présente une bride de guidage (24) guidée sur ce dispositif de guidage (22), un dispositif à ressort de pression (25) étant mis en oeuvre entre la butée (26) et la bride de guidage (24).

8. Fermeture de retenue selon l'une des revendications précédentes, caractérisée en ce que l'élément tubulaire d'admission (9) est incurvé ou marque une inflexion.

9. Fermeture de retenue selon l'une des revendications précédentes, caractérisée en ce que, entre la partie de raccordement (4) fixée sur le tube de transport (3) et l'élément tubulaire d'admission (9) lui étant relié et articulé, est prévu un joint d'étanchéité (11) mobile, en particulier une plaque flexible.

10. Fermeture de retenue selon l'une des revendications précédentes, caractérisée en ce que, entre l'élément tubulaire d'admission (9) et la partie de fermeture (21) mobile, est prévue un joint d'étanchéité (31) mobile, en particulier une plaque flexible.
